# EUROPEAN PATENT SPECIFICATION

(11) **EP 2 144 691 B1**
(45) Date of publication and mention of the grant of the patent: **06.05.2015**
(21) Application number: 08751527.6
(22) Date of filing: 28.03.2008
(51) Int. Cl.: B01D 53/94, F01N 3/20

(54) **APPARATUS AND PROCESS FOR REDUCING THE CONTENT OF NITROGEN OXIDES IN EXHAUST GASES OF COMBUSTION SYSTEMS**
VORRICHTUNG UND VERFAHREN ZUR REDUKTION DES STICKOXID-GEHALTES VON ABGASEN AUS VERBRENNUNGSSYSTEMEN
APPAREIL ET PROCÉDÉ POUR RÉDUIRE LA TENEUR EN OXYDES D'AZOTE DANS DES GAZ D'ÉCHAPPEMENT DE SYSTÈME DE COMBUSTION

(30) Priority: 12.04.2007 IT MI20070742
(43) Date of publication of application: 20.01.2010
(73) Proprietor: Politecnico di Milano, 20133 Milano (IT)
(72) Inventor: FORZATTI, Pio, I-20052 Monza (IT); TRONCONI, Enrico, I-20043 Arcore (MI) (IT); NOVA, Isabella, I-20100 Milano (IT)
(74) Representative: Perani, Aurelio
(86) International application number: PCT/IT2008/000206
(87) International publication number: WO 2008/126118

(56) References cited:
- US-A- 5 362 463
- US-A1- 2004 115 111

## Description

The present invention relates to an apparatus for the reduction of nitrogen oxides content in exhaust gases of combustion systems and to processes for the functioning thereof. The apparatus of the invention is advantageously used in both fixed and mobile applications.

The Selective Catalytic Reduction (SCR) is a known technique used all over the world in order to reduce the nitrogen oxides (NOₓ) emissions from stationary and mobile sources (P. Forzatti, L. Lietti, E. Tronconi: "Nitrogen Oxides Removal - and "Industrial Processes and Relevant Engineering Issues", Encyclopedia of Catalysis, Wiley (New York), Vol. 5,298-343 (2003)).

According to the SCR technique, a hot exhaust gases flow containing nitrogen oxides is passed over a catalyst in the presence of a reducing agent, generally ammonia or urea in the presence of oxygen, so as to reduce the nitrogen oxides to molecular nitrogen.

Such a technique is particularly used in stationary applications, wherein catalysts typically operate at temperatures of 300 to 400°C, in particular, in thermal power stations powered with natural gas, coal and combustion oil, gas turbines, industrial boilers, incinerators, chemical plants, diesel engines, in the cement, glass and steel industry and also on ships. The use of NOₓ reduction in combination with the oxidation of dioxins and furans in waste incineration plants is also known.

The SCR. technique is also used in mobile applications in order to reduce the nitrogen oxides present in the exhaust gases of internal combustion engines, operating with an excess of oxygen such as, for example, diesel engines, lean-burn spark-ignition gasoline engines, such as gasoline direct injection (GDI) engines and compressed natural gas (CNG) engines.

As the SCR technique has shown to be poorly effective at low temperatures (200-250°C), its implementation in vehicles has given inadequate results, in particular at the engine start or, also, on short distances, i.e. when more NOx are produced.

The low temperature activity represents a problem also for stationary applications.

Methods for increasing the efficacy of SCR systems are known, when the used temperatures are even as low as in the order of 150°C-200°C.

The Japanese document no. JP10299461 discloses to associate an electrical heater to the SCR removal device and to the exhaust gases input/output pipes in order to quickly raise the temperature of the nitrogen oxides removal system up to the reaction temperature. Thereby the catalyst removal action is executed since the starting of the engine. Such a system, if on one hand allows to reduce nitrogen oxides during the whole functioning cycle of the engine, on the other it appears to be disadvantageous as it implies a high electric power consumption.

In order to maintain the optimal temperature for the execution of the NOx reduction reaction, for example in thermoelectric equipments, it has been proposed to use a heat exchanger (Patent AT385211B). Specifically, the combustion gases are fed to the heat dissipating region of the heat exchanger. This is followed by dust removal and desulphurization of combustion gases, which are then conveyed into the heat exchanger. Thereby the combustion gases, which have been cooled below 100 °C, are heated in the heat absorbing region of the heat exchanger up to the temperature required for the selective catalytic reduction of nitrogen oxides and are then fed to the SCR unit. Even though, advantageously, the use of the heat exchanger avoids the use of an additional combustor to heat exhaust gases, it highly increases the manufacturing costs of the equipment itself.

In the most effective equipment configurations from an energetic point of view of both industrial and civic waste incinerators, exhaust gases are suitably treated to eliminate powders and remove pollutants through electrostatic precipitators and wet washing and/or adsorption respectively, followed by filtration in fabric filters prior to being passed over the SCR catalyst. They can subsequently be heated up to the desired temperature of 200-250°C through low pressure vapor, which is a mean to provide heat at low cost. However, due to catalysis low temperatures, the system results to be expensive because it requires large volumes of catalyst, even though the catalyst additional cost is at least in part offset by the fact that a gas heating system is not necessary, i.e. by the fact that the heating system cost results to be reduced.

An alternative method for improving the SCR catalysts activity in removing nitrogen oxides at low temperatures is that of increasing the NO₂/NO molar ratio in exhaust gases. In fact, it is known since the beginning of the '80s that the kinetics of the NOx reduction reaction at low temperature can be promoted by increasing the NO₂ percentage against NO up to a maximum corresponding to a NO₂/NO molar ratio of 1 (A. Kato, S. Matsuda, T. Kamo, F. Nakajima, H. Kuroda, T. Narita, J. Phys. Chem. 85 (1981) 4099). The reaction between ammonia and nitrogen oxides with a NO₂/NO molar ratio of 1 is often called Fast SCR.

Therefore, the US document US 6,805,849 discloses to incorporate, in the NOx reduction system of a diesel engine, an oxidation catalyst to convert at least one portion of NO into NO₂, injection means downstream of the oxidation catalyst of a reducing agent such as ammonia or urea and a SCR catalyst for nitrogen oxides reduction, placed downstream of the reducing agent injection means. In this case, the proposed oxidation catalysts include platinum-based catalysts, being considered as suitable catalysts of Pt/Al₂O₃, containing 0.035-5.3 g of Pt per litre of catalyst (column 2, lines 26-31). The system to carry out the reduction reaction requires, anyway, the use of large amounts of expensive noble metal-based catalyst and the maintenance of the temperature required for the execution of the SCR reaction not only for exhaust gases but also for the oxidation catalyst.

It is also known to use suitable means for controlling and maintaining the SCR reaction. In fact the exhaust gases temperature, the gas flow rate and the NOx concentration therein range over a wide range of values and undergo sharp modifications, so that additional devices are necessary to control, according to the temperature, the ratio of the exhaust gas flow rate, passing through the oxidation catalyst and the SCR catalyst disposed in a series, to the exhaust gas flow rate passing through the SCR catalyst after having by-passed the oxidation catalyst in order to suitably adjust the NO₂/NO ratio entering the SCR reactor, such as for example disclosed in the Japanese document JP20062075512.

An alternative method for reducing nitrogen oxides at temperatures lower than 200°C, which are typical of cars in the urban traffic, with the SCR system is disclosed in document WO98/52679. It consists of placing a non-thermal plasma module upstream of the SCR catalytic converter. However, such configuration, being a large amount of hydrocarbons present in the exhaust gases, in particular at the cold-start of the engine and on short distances, has forced to include, in the NOx reduction cycle, a prior phase of hydrocarbons absorption (application US2003/0077212), with evident additional costs to the plasma reactor, which is in itself expensive.

In order to reduce nitrogen oxides in the exhaust gases of a lean-burn engine, Patent US6,713,030 discloses to intermittently feed ammonia during the engine functioning so that the ammonia is adsorbed when fed and the adsorbed ammonia reacts with the NOx even when the feeding is stopped. Although the method allows to take advantage of the fact that the ammonia adsorption is favoured at law temperatures, nevertheless the adsorbed ammonia reactivity is significant only at the typical temperatures of the SCR reaction.

Patent US 2005/0198943 discloses to adsorb ammonia, even when the engine has been switched off. Thereby, when the engine is restarted the nitrogen oxides present in the exhaust gases by passing over the catalyst with the adsorbed ammonia react to give nitrogen and water. Also in this case, although the method allows to take advantage of the low temperature ammonia adsorption, in particular when the engine is off, the adsorbed ammonia reactivity is nevertheless significant only at the typical temperatures of the SCR reaction.

Therefore up to now, the only method used to efficiently reduce nitrogen oxides in exhaust gases in mobile applications remains the implementation of the Fast SCR reaction, which anyway implies the installation of an expensive, voluminous and complex to manage pre-oxidation catalyst.

It is therefore felt, to date, the need of efficiently reducing the nitrogen oxides present in the exhaust gases of combustion systems, through the SCR technique in both fixed and mobile applications i.e. over a wide range of temperatures.

The inventors of the present invention have proposed a mechanism of the Fast SCR reaction over V₂O₅/WO₃/TiO₂ catalysts, which implies the in situ formation of ammonium nitrate as intermediate in the reaction, which is able to react with the existing NO in order to complete the reduction reaction of nitrogen oxides in exhaust gases (C. Ciardelli, I. Nova, E. Tronconi, D. Chatterjee, B. Konrad,"A Nitrate route for the low temperature "Fast SCR" reaction over a V2O5-WO3/TiO2 commercial catalyst", Chem. Commun., 2718 - 2719 (2004)).

In the technical-scientific literature, the in situ formation of ammonium nitrate has been judged unfavourable, as operating at low temperature. In particular, with reference to zeolite-based catalysts, some authors state that the in situ ammonium nitrate formation can reduce the catalytic activity of the catalyst, even proposing an alternative reaction mechanism leading to the formation of ammonium nitrite through NO, being the ammonium nitrite considered favourable for the reduction to molecular nitrogen (Hoon Yeom et al., J.Catal. 231 (2005), page 191). In the case of vanadium-based catalysts, other authors state that the in situ formation of such compound is not relevant for the purposes of the catalytic mechanism and dare to state that it has to be avoided as it represents an inhibiting effect for the execution of the Fast SCR reaction at low temperature (Koebel et al., Ind. Eng. Chem. Res. 40 (2001) 57; Catal. Today 73 (2002) 239).

Despite the suspicion encountered in the scientific field, on the proposed mechanism, which implies the in situ formation of ammonium nitrate in the Fast SCR reaction, the inventors of the present invention have studied in more detail and have surprisingly found that, regardless of the proposed mechanism, the addition of a nitrogenous compound having a nitrogen atom with oxidation state of five in the SCR system allows to efficiently carry out the SCR reaction at low temperatures.

The object of the present invention is therefore to reduce nitrogen oxides in exhaust gases over a wide range of temperatures.

A further object of the present invention is to overcome the disadvantages of the prior art through a system which is simple to build and function and which is not expensive.

The objects of the present invention have been achieved by a catalytic process and apparatus for treating the exhaust gases of a combustion system as indicated in claims 1 and 15.

The features and advantages of the present invention will become apparent from the following detailed description further taken with reference to some examples given by way of illustration and not limitation of the invention and to the appended drawings, wherein:
- Figure 1 shows a graph of the NO conversion over a SCR catalyst as temperature varies with feed according to the prior art (A) and feed according to the invention (B);
- Figure 2 shows a graph of the NO conversion over a SCR catalyst as temperature varies with feed according to the prior art (A) and feed according to the invention (B); and
- Figure 3 shows a graph of the NO conversion over a SCR catalyst of two examples of the invention as temperature varies.

The apparatus of the present invention for reducing nitrogen oxides content in the exhaust gases of a combustion system comprises a SCR catalyst and feed means of an ammonia-based reducing agent and a nitrogenous oxidizing agent having a nitrogen atom with oxidation state of five.

Preferably said ammonia-based reducing agent is selected from the group consisting of ammonia, ammonium acetate, ammonium bicarbonate, ammonium carbamate, ammonium chloride, ammonium formate, ammonium hydroxide, ammonium oxalate, ammonium sulphate, ammonium tartrate, ammonium carbonate, urea and mixtures thereof. More preferably said ammonia-based reducing agent is selected from ammonia and urea, still more preferably it is urea.

Said reducing agent is a fluid in the liquid or gaseous form, preferably in the form of a liquid solution, still more preferably an aqueous solution. When said reducing agent is preferably urea in aqueous solution, it is, still more preferably, 32.5 wt% urea in aqueous solution.

The nitrogenous oxidizing agent having a nitrogen atom with oxidation state of five is preferably selected from the group consisting of urea nitrate, ammonium nitrate, nitric acid and mixtures thereof. More preferably said oxidizing agent is selected from ammonium nitrate and urea nitrate, still more preferably it is ammonium nitrate. Said oxidizing agent is a fluid in the liquid or gaseous form, preferably in the form of a liquid solution, still more preferably an aqueous solution. When said nitrogenous oxidizing agent having a nitrogen atom with oxidation state of five is preferably ammonium nitrate in aqueous solution, it is, still more preferably, about 50 wt% ammonium nitrate in aqueous solution.

Said feed means of said ammonia-based reducing agent and of said nitrogenous oxidizing agent having a nitrogen atom with oxidation state are preferably placed upstream of the SCR catalyst.

The feed means according to the invention can consist of one or more vessels each equipped with at least one injection device. In a first embodiment, the invention implies a feed vessel of said reducing agent and a feed vessel of said oxidizing agent and injection devices of which at least one in common. Alternatively in a second embodiment, said reducing agent and said oxidizing agent are in the form of a mixture, which is contained in a single vessel equipped with at least one injection device. In a third embodiment, the apparatus according to the invention is equipped with two vessels, feeding a reducing agent and an oxidizing agent respectively according to the invention, being each of said vessels equipped with at least one appropriate injection device.

Preferably, in the first embodiment according to the invention, the ratio of the oxidizing agent to the reducing agent can be unchanging or can be properly adjusted by suitable regulating means of the agents' metering. Also in case of metering regulation, the ratio can advantageously be unchanging as average over time.

Preferably, in the second embodiment according to the invention, the ratio of the oxidizing agent to the reducing agent is unchanging, while in the third embodiment, the ratio of said oxidizing agent to said reducing agent can be properly adjusted by suitable regulating means of the agents' metering. As in the first embodiment, also in the third embodiment of the invention the ratio can be advantageously unchanging as average over time.

More preferably, the ratio of nitrogenous oxidizing agent having a nitrogen atom with oxidation state of five to ammonia-based reducing agent, advantageously also in the first and third embodiments as average ratio over time, is such that the ratio of nitrate ion equivalents present in the oxidizing agent to ammonium ion equivalents present in the reducing agent and, eventually, in the oxidizing agent itself, is preferably greater than 0, but lower than or equal to 0.5, preferably in the range of 0.1 to 0.4 and, still more preferably, of about 1/3.

Advantageously, when the oxidizing agent is ammonium nitrate and the reducing agent is ammonia, their molar ratio will preferably be greater than 0, but lower than or equal to 1, more preferably in the range of 1/9 to 2/3 and, still more preferably, of about 1/2.

More advantageously, when the apparatus according to the invention is equipped with only one vessel as feed means of said agents:
- it can preferably include 40.1 wt% to 44.3 wt% ammonium nitrate (oxidizing agent of the invention), 30 wt% to 35.4 wt% urea (reducing agent of the invention), the balance being water and optionally additives, or
- it can preferably include 50.7 wt% to 56 wt% urea nitrate (oxidizing agent of the invention), 11.8 wt% to 14 wt% urea (reducing agent of the invention), the balance being water and optionally additives.

In the case of the first and third embodiments of the invention, which imply two vessels as feed means of the oxidizing agent and the reducing agent respectively according to the invention, the molar ratio of the two agents can be suitably adjusted. Advantageously, the concentration of the two agents in the relevant vessel will be lower than their solubility limit, which on its turn will depend on the temperature. Preferably, in the case of ammonium nitrate (and also for urea nitrate) as oxidizing agent and urea as reducing agent, such concentration will be lower than about 50 wt% for ammonium nitrate in aqueous solution and about 32.5 wt% for urea in aqueous solution.

The apparatus according to the invention comprises a catalyst suitable for the SCR reaction. Advantageously said catalyst is selected from the group consisting of vanadia-based catalysts, Cu/Fe oxides-based catalysts, vanadia-tungsta/titania-based catalysts, vanadia-molybdena/titania-based catalysts, zeolite/Fe-based catalysts and Zeolite/Cu-based catalysts. Preferably, said catalyst is selected from the group consisting of Fe/ZSM5 and V₂O₅-WO₃/TiO₂. Preferably, said catalysts are structured catalysts, such as bulk extrusions, deposited in the form of thin layers either on honeycomb ceramic matrix or on metal plates or on wire meshes, ceramic and metal sponges, alternated and rolled-up smooth and corrugated plates. Still more preferably, said structured catalysts are bulk extrusions or deposited in the form of thin layers either on honeycomb ceramic matrix or on metal plates or on wire meshes. Advantageously, said structured catalysts have a number of cells per square inch (cpsi) ranging from 50 to 900, preferably from 200 to 600 and still more preferably from 300 to 400.

The apparatus according to the invention comprises SCR catalysts suitable to function, preferably, at temperatures of 50°C to 550°C, more preferably 150°C to 420°C, still more preferably 170 °C to 300 °C.

In another aspect, the invention further implies a process for the reduction of nitrogen oxides content in the exhaust gases of a combustion system through an apparatus according to the invention such as claimed in claim 1, comprising the step of feeding an ammonia-based reducing agent and a nitrogenous oxidizing agent having a nitrogen atom with oxidation state of five over a SCR catalyst.

The process according to the invention therefore uses an apparatus such as described above, also in its preferred and advantageous embodiments, to reduce the nitrogen oxides content in the exhaust gases flow. Specifically and preferably, the process of the invention includes the step of feeding an ammonia-based reducing agent and a nitrogenous oxidizing agent having a nitrogen atom with oxidation state of five in a nitrogen oxides-containing exhaust gases flow over a SCR catalyst.

Preferably, therefore, the feed may occur using both a single vessel feeding both the ammonia-based reducing agent and the nitrogenous oxidizing agent having a nitrogen atom with oxidation state of five, and two separate vessels. In both cases, the feed according to such process may occur continuously or intermittently through appropriate intermittent injection means.

Preferably, when the feeding step occurs continuously both in the case of feed from a single vessel and in the case of two separate vessels, the average ratio over time of said oxidizing agent to said reducing agent is such that the ratio of nitrate ion equivalents present in the oxidizing agent to ammonium ion equivalents present in the reducing agent and, eventually, in the oxidizing agent itself, is greater than 0, but lower than or equal to 0.5 preferably in the range of 0.1 to 0.4 and, still more preferably, of about 1/3.

The process according to the invention implying the step of continuously feeding said agents is preferably suitable for stationary applications, such as in thermal power stations, gas turbines and waste incinerators.

Preferably, when the feed occurs intermittently, the ratio of said oxidizing agent having a nitrogen atom with oxidation state of five to said reducing agent can be modulated by appropriate modulating means of the two said agents' dose according to the SCR apparatus operating conditions. More preferably, also when the feed occurs intermittently, the average ratio over time of said oxidating agent to said reducing agent is such that the ratio of nitrate ion equivalents present in the oxidizing agent to ammonium ion equivalents present in the reducing agent and, eventually, in the oxidizing agent itself, is greater than 0, but lower than or equal to 0.5 preferably in the range of 0.1 to 0.4 and, still more preferably, of about 1/3.

In fact, advantageously and preferably in mobile applications, wherein the exhaust gases flow, temperature and NOx concentration rapidly change over time during the engine functioning, the oxidizing and reducing agents according to the invention will be suitably dosed by appropriate dosage means according to the measured conditions.

More advantageously, both in fixed and mobile applications, the ratio of ammonium ion equivalents present in both the reducing agent and eventually the oxidizing agent and the sum of the NOx volumes present in the exhaust gases to the nitrate ion equivalents present in the oxidizing agent will be lower than or equal to about 1 (for the applications operating in non-stationary conditions being such value intended as an average value over time).

In another aspect, the invention implies the step of feeding first the oxidizing agent according to the invention in the absence of NOx, subsequently the exhaust gases together with the reducing agent according to the invention as indicated in claim 10. Advantageously, such process is carried out by the apparatus of the invention which comprises feed means consisting of two separate vessels to feed the reducing agent and the oxidizing agent respectively.

In still another aspect, the invention implies to feed an ammonia-based reducing agent and a nitrogenous oxidizing agent having a nitrogen atom with oxidation state of five over a SCR catalyst and subsequently have a nitrogen oxides-containing exhaust gases flow flow alone or together with the reducing agent over said catalyst, as indicated in claim 11.

Advantageously, such a process implying the step of primarily feeding said oxidizing agent and said reducing agent, specifically implies that once fed, said agents are adsorbed over the SCR catalyst so as to allow for the reduction of the NOx when the gas containing said NOx is then passed. Said process according to the invention is preferably suitable for mobile applications, more preferably at temperatures of at least about 100°C, preferably of 100°C to 200°C, typical at the start of an engine or when short distances are covered.

The process according to the invention and the catalyst used in such a process are advantageously applied over a wide range of temperatures, preferably from 50 to 550°C, more preferably at temperatures of 150°C to 420°C, still more preferably at temperatures of 170 to 300°C.

Its features therefore make it suitable for both stationary and mobile applications in the field of combustion systems.

Stationary applications include thermal power stations powered with natural gas, coal and combustion oil, gas turbines, industrial boilers, waste incinerators, chemical plants, HNO₃ production plants, catalytic cracking plants, explosive manufacturing plants, stationary diesel engines, the steel, cement and glass industry and ships.

Mobile applications include diesel engines, lean-burn spark-ignition gasoline engines, such as gasoline direct injection (GDI) engines and compressed natural gas (CNG) engines.

The invention will now be illustrated by means of some exemplary embodiments and applications of the apparatus of the invention, given by way of illustration and not as a limitation thereof.

### EXAMPLES

### Example 1

### Comparative example 1a

A flow of 2.96 litres per minute of a gaseous mixture comprising NO (1000 ppm), NH₃ (1000 ppm), H₂O (1% v/v), O₂ (2% v/v) with the balance nitrogen was passed at 200 °C over a Fe-ZSM5 catalyst (3.25g), i.e. a SCR catalyst based on zeolite deposited in the form of thin layer on a monolithic honeycomb structure with number of cells per square inch (cpsi) of 400. The NO conversion was then evaluated, which resulted to be lower than about 10%.

### Example 1b of the invention

A solution of ammonium nitrate in water (13.34 wt%) was prepared. A flow of 2.96 litres per minute of a gaseous mixture comprising NO (1000 ppm), NH₃ (1000 ppm), H₂O (1% v/v), O₂ (2% v/v) with the balance molecular nitrogen, was then passed at 200 °C over the same catalyst as example 1a. The ammonium nitrate-containing solution was then fed upstream of the catalyst with a flow rate equal to the feed of 340 ppm of ammonium nitrate and the NO conversion was evaluated. It resulted to be 65%.

### Comparative example 1c

Example 1a was repeated, but the water vapor concentration in the gaseous flow was changed being equal to 10% v/v. The evaluated conversion was of 9%.

### Example 1d of the invention

A flow rate equal to the feed of 300 ppm of NH₄NO₃ was then fed upstream of the catalyst over the flow of example 1 c. The conversion was 66%.

### Example 2

### Comparative example 2a

A flow of 4.9 litres per minute of a gaseous mixture comprising NO (500 ppm), NH₃ (750 ppm), H₂O (1% v/v), O₂ (2% v/v) with the balance molecular nitrogen, was passed at 205 °C over a Fe-ZSM5 catalyst (3.25g), i.e. a SCR catalyst based on zeolite deposited in the form of thin layer on a monolithic honeycomb structure with number of cells per square inch (cpsi) of 400. The NO conversion was then evaluated, which resulted to be equal to about 10%.

### Example 2b of the invention

A solution of nitric acid in water (8.82 wt%) was prepared. A flow of 4.9 litres per minute of a gaseous mixture comprising NO (1000 ppm), NH₃ (1000 ppm), H₂O (1% v/v), O₂ (2% v/v) with the balance molecular nitrogen was then passed at 205 °C over the catalyst of example 2a. The nitric acid-containing solution was then fed upstream of the catalyst with a flow rate equal to the feed of 250 ppm of ammonium nitrate and the NO conversion was evaluated. It resulted to be 90%.

### Example 3

### Comparative example 3a

A flow of 2.86 litres per minute of a gaseous mixture comprising NO (1000 ppm), NH₃ (1000 ppm), H₂O (1% v/v), O₂ (2% v/v) with the balance molecular nitrogen, was passed at 203 °C over a vanadium V₂O₅-WO₃/TiO₂-based SCR catalyst (3.81 g) with monolithic honeycomb structure obtained by extrusion with number of cells per square inch (cpsi) of 300. The NO conversion was then evaluated, which resulted to be equal to about 24.5%.

### Example 3b of the invention

A solution of ammonium nitrate in water (11.48 wt%) was prepared. A flow of 2.86 litres per minute of a gaseous mixture comprising NO (1000 ppm), NH₃ (1000 ppm), H₂O (1% v/v), O₂ (2% v/v) with the balance molecular nitrogen was then passed at 203 °C over the catalyst of example 3a. The ammonium nitrate-containing solution was then fed upstream of the catalyst with a flow rate equal to the feed of 300 ppm of ammonium nitrate and the NO conversion was evaluated. It resulted to be 63%.

### Comparative example 3c

Example 3a was repeated, but the water vapor concentration in the gaseous flow was changed being equal to 10% v/v. The evaluated conversion was of 23%.

### Example 3d of the invention

A NH₄NO₃ aqueous solution was then fed over the flow of example 3c upstream of the catalyst with a flow rate equal to the feed of 300 ppm of ammonium nitrate (11.48 wt%). The conversion was 70%.

The above examples 1, 2, and 3 therefore show that the oxidizing agent feeding according to the invention to the gas flow already containing the reducing agent (fed according to the technique known as SCR) drastically increases the NOx conversion in exhaust gases at low temperatures.

### Example 4

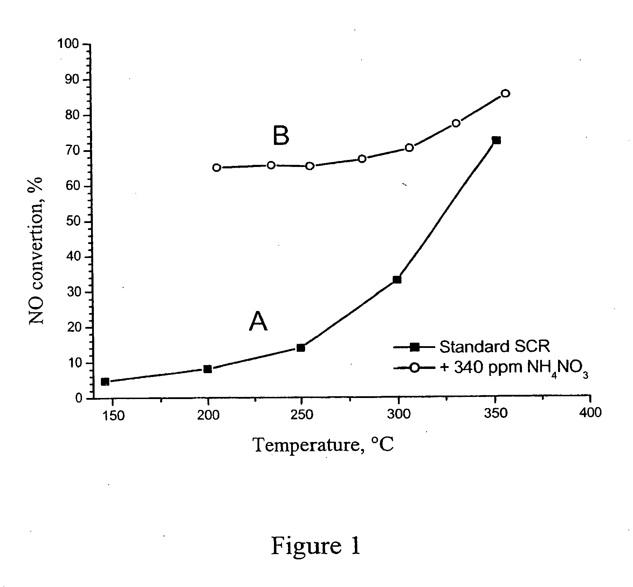

A flow of 2.96 litres per minute of a gaseous mixture comprising NO (1000 ppm), NH₃ (1000 ppm), H₂O (1% v/v), O₂ (2% v/v) with the balance molecular nitrogen, was passed over a Fe-ZSM5 catalyst (3.25g), i.e. a SCR catalyst based on zeolite deposited in the form of thin layer on a monolithic honeycomb structure with number of cells per square inch (cpsi) of 400. The NO conversion was then evaluated over the temperature range of 146 to 352 °C. The conversion values shown in Table 1 (system A) and in the graph of Figure 1 (A) were then obtained.

The conversion evaluation was repeated over the temperature range of 206 to 357°C, but feeding to the above mentioned gaseous mixture upstream of the catalytic system a solution of ammonium nitrate in water (13.34 wt%) with a flow rate equal to the feed of 340 ppm of ammonium nitrate. The conversion values shown in Table 1 (system B) and in the graph of Figure 1 (B) were obtained.

**Table 1: NO conversion values for system A and system B**

| **System A** | | **System B** | |
|---|---|---|---|
| **T, °C** | **NOx conversion, %** | **T, °C** | **NOx conversion, %** |
| 146 | 4.8 | 206 | 65 |
| 200 | 8.2 | 235 | 65.6 |
| 250 | 14 | 256 | 65.3 |
| 300 | 33 | 283 | 67.3 |
| 352 | 72.2 | 307 | 70.3 |
| | | 332 | 77.1 |
| | | 357 | 85.4 |

From Table 1 and the graph of Figure 1 it is evident that the catalytic system according to the invention (system B), which implies feeding, besides the reducing agent, a nitrogenous oxidizing agent having a nitrogen atom with oxidation number of five, converts nitrogen oxides into molecular nitrogen in a high percentage, even at low temperatures. The system according to the invention is therefore suitable for all the range of temperatures.

### Example 5

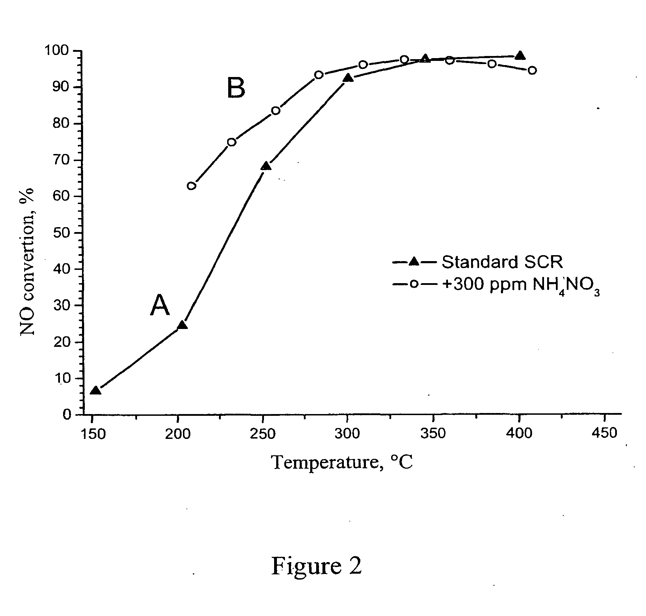

A flow of 2.86 litres per minute of a gaseous mixture comprising NO (1000 ppm), NH₃ (1000 ppm), H₂O (1% v/v), O₂ (2% v/v) with the balance molecular nitrogen, was passed over a vanadium V₂O₅-WO₃/TiO₂-based SCR catalyst (3.81 g) with monolithic honeycomb structure obtained by extrusion with number of cells per square inch (cpsi) of 300. The NO conversion was then evaluated over the temperature range of 152 to 402 °C. The conversion values shown in Table 2 (system A) and in the graph of Figure 2 (A) were obtained.

The conversion evaluation was repeated over the temperature range of 209 to 409°C, but feeding upstream of the catalytic system to the above mentioned gaseous mixture a solution of ammonium nitrate in water (11.48 wt%) with a flow rate equal to the feed of 300 ppm of ammonium nitrate. The conversion values shown in Table 2 (system B) and in the graph of Figure 2 (B) were obtained.

**Table 2: NO conversion values for system A and system B**

| **System A** | | **System B** | |
|---|---|---|---|
| **T, °C** | **NOx conversion, %** | **T, °C** | **NOx conversion, %** |
| 152 | 6.5 | 209 | 62.8 |
| 203 | 24.5 | 233 | 74.8 |
| 253 | 68.1 | 259 | 83.6 |
| 302 | 92.2 | 285 | 93.2 |
| 347 | 97.4 | 311 | 95.9 |
| 402 | 98.2 | 335 | 97.4 |
| | | 361 | 97.1 |
| | | 386 | 96 |
| | | 409 | 94.3 |

As from Table 1 and Figure 1, also from Table 2 and Figure 2 it is evident that the catalytic system according to the invention, which implies feeding an oxidizing agent too, such as ammonium nitrate, allows for an excellent conversion over a wide range of temperatures, being particularly advantageous at low temperature.

### Example 6

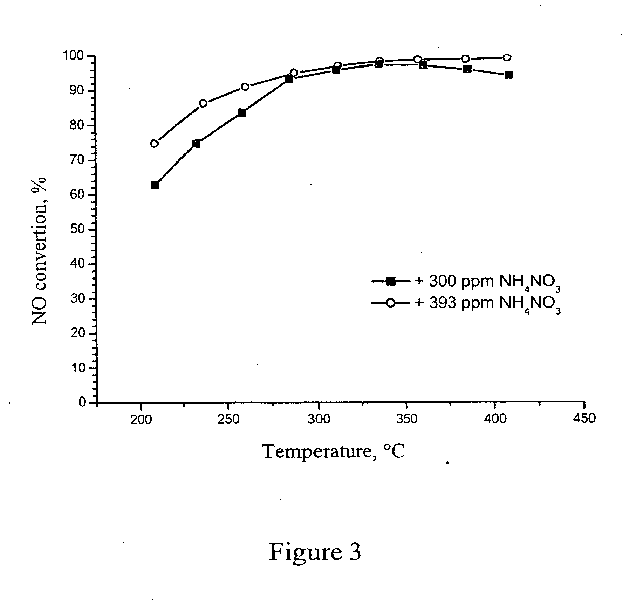

The evaluation carried out in example 5 was repeated, with an aqueous solution of NH₄NO₃ (14.84% w/w) with a flow rate equal to the feed of 393 ppm of ammonium nitrate so that the ratio of nitrate ion equivalents to ammonium ion equivalents was closer to 1/3 (specifically 0.282). The conversion values as temperature varies are shown in Table 3 and represented in Figure 3, together with those obtained with example 5 (having 300 ppm of NH₄NO₃, ratio of nitrate ion equivalents to ammonium ion equivalents of 0.23).

**Table 3: NO conversion values for example 5 (300 ppm of NH₄NO₃) and for example 6 (393 ppm of NH₄NO₃).**

| 300 ppm of NH₄NO₃ | | 393 ppm of NH₄NO₃ | |
|---|---|---|---|
| **T, °C** | **NOx conversion, %** | **T, °C** | **NOx conversion, %** |
| 209 | 62.8 | 209 | 75.4 |
| 233 | 74.8 | 237 | 87.2 |
| 259 | 83.6 | 261 | 92 |
| 285 | 93.2 | 288 | 95.7 |
| 311 | 95.9 | 312 | 96.8 |
| 335 | 97.4 | 336 | 96.6 |
| 361 | 97.1 | 358 | 94.4 |
| 386 | 96 | 385 | 91.9 |
| 409 | 94.3 | 408 | 89.8 |

Table 3 and Figure 3 show that with the same amount of reducing agent (NH₃), the increase in the NH₄NO₃ concentration allows for still higher conversions, confirming that the ratio of nitrate ion equivalents to ammonium ion equivalents is preferably of about 1/3. In particular, NOx conversion at 209°C increased from 62.8 to 75.4%.

### Example 7

A flow of 2.86 litres per minute of a gaseous mixture comprising NO (1000 ppm), H₂O (1% v/v), O₂ (2% v/v), with the balance nitrogen, was passed over a vanadium V₂O₅-WO₃/TiO₂-based SCR catalyst (3.81 g) with monolithic honeycomb structure obtained by extrusion with number of cells per square inch (cpsi) of 300. A gaseous mixture comprising 400 ppm of NH₄NO₃ and NH₃ (1000 ppm) obtained from an aqueous solution of NH₄NO₃ (13 wt%) and ammonium hydroxide (14.2 wt%) was then fed from a single vessel. The NO conversion was then evaluated, which resulted to be 62%.

The example was repeated, but feeding a gaseous mixture of 400 ppm of NH₄NO₃ and NH₃ (1000 ppm) obtained from two separate vessels specifically containing an aqueous solution of NH₄NO₃ (13 wt%) and an aqueous solution of ammonia (14.2 wt%). The conversion was then evaluated, which resulted to be 60%.

As shown by the example, in both the two embodiments of the invention with single or double vessels, the conversion of nitrogen oxides into molecular nitrogen was high.

### Example 8

A flow of 2.9 litres per minute of a gaseous mixture comprising NH₃ (1000 ppm), NH₄NO₃ (500 ppm), water (1%), and oxygen (2%) with the balance nitrogen was passed over the zeolite-based SCR catalyst of example 1 (3.25 g) at 200 °C for 30 minutes. Subsequently the gaseous mixture flow was interrupted and another gaseous mixture comprising NO (1000 ppm), NH₃ (1000 ppm), water (1%) and oxygen (2%) with the balance nitrogen was flowed over the catalyst. The conversion, which exceeded 90%, was evaluated and was maintained for about 10 minutes.

In a parallel experiment a gaseous mixture including NH₃ (1000 ppm), water (1%) and oxygen (2%) with the balance nitrogen was passed over a zeolite-based catalyst of the kind described in example 1 (3.25 g) at 200 °C for thirty minutes. Subsequently, the gases flow was interrupted and a gaseous mixture consisting of NO (1000 ppm), water (1%) and oxygen (2%) with equilibrium nitrogen was flowed over the catalyst. In this case the initial NOₓ conversion was 10% and the reaction stopped after about 20 minutes.

Example 8 therefore shows that also the feeding to the SCR catalyst of the agents of the invention prior to the exhaust gases flow together with the reducing agent allows to reduce the high level nitrogen oxides content at low temperatures, in the order of 200°C.

The above examples have therefore demonstrated the efficacy of the SCR catalytic apparatus according to the invention for reducing nitrogen oxides in molecular nitrogen, when besides the ammonia-based reducing agent a nitrogenous oxidizing agent having a nitrogen atom with oxidation state of 5 is used.

The invention has been described with reference to some exemplary embodiments, but changes can be made, for example quantitatively in the feed vessels of the agents of the invention, or even variations to the above configurations without anyway departing from the protection scope of the invention such as defined in the following claims.

## Claims

1. A process for the reduction of nitrogen oxides content in the exhaust gases of a combustion system, carried out by means of an apparatus comprising a SCR catalyst and upstream thereof feed means of an ammonia-based reducing agent and a nitrogenous oxidizing agent having a nitrogen atom with oxidation state of five, said process comprising the step of feeding through said feed means a gaseous or liquid form of an ammonia-based reducing agent and a gaseous or liquid form of a nitrogenous oxidizing agent having a nitrogen atom with oxidation state of five.

2. The process according to claim 1 wherein the feeding step occurs through feeding means consisting of a single vessel which feeds both the ammonia-based reducing agent and the nitrogenous oxidizing agent having a nitrogen atom with oxidation state of five.

3. The process according to claim 1, wherein the feeding step occurs through two vessels which feed the ammonia-based reducing agent and the nitrogenous oxidizing agent having a nitrogen atom with oxidation state of five respectively, through injection devices of which at least one is in common.

4. The process according to claim 1, wherein the feeding step occurs through two vessels equipped with their own injection devices, which feed the ammonia-based reducing agent and the nitrogenous oxidizing agent having a nitrogen atom with oxidation state of five respectively.

5. The process according to anyone of claim 1-4, wherein the feeding step said oxidizing agent and reducing agent occurs either in a continuous way or in an intermittent way.

6. The process according to claim 5, wherein in both the continuous and intermittent feeding step, the average ratio over time of said oxidizing agent to said reducing agent is such that the ratio of nitrate ion equivalents present in the nitrogenous oxidizing agent having a nitrogen atom with oxidation state of five to ammonium ion equivalents present in the reducing agent and, eventually, in the nitrogenous oxidizing agent itself is greater than 0 and lower than or equal to 0.5.

7. The process according to claim 5, wherein in the case of the intermittent feeding step, the ratio of said oxidizing agent having a nitrogen atom with oxidation state of five to said reducing agent can be modulated through appropriate modulating means of the two said agents' dose according to the SCR apparatus operating conditions.

8. The process according to any one of claims 1-7, wherein the ratio of ammonium ion equivalents present in both the reducing agent and eventually the oxidizing agent and the sum of the NOx volumes present in the exhaust gases to the nitrate ion equivalents present in the oxidizing agent will be lower than or equal to about 1.

9. The process according to claim 1, wherein said step of feeding an ammonia-based reducing agent and a nitrogenous oxidizing agent having a nitrogen atom with oxidation state of five occurs in the following order: a) feeding the oxidizing agent in the absence of NOx over the SCR catalyst, and b) passing the exhaust gases together with the reducing agent.

10. The process according to claim 1 wherein said step of feeding an ammonia-based reducing agent and a nitrogenous oxidizing agent having a nitrogen atom with oxidation state of five over the SCR catalyst occurs prior to having a flow of exhaust gases flow alone or together with the reducing agent.

11. The process according to anyone of claims 1-10, carried out at temperatures in the range of 50 to 550°C.

12. The process according to anyone of claims 1-11 wherein the ammonia-based reducing agent is selected from the group consisting of ammonia, ammonium acetate, ammonium bicarbonate, ammonium carbamate, ammonium chloride, ammonium formate, ammonium hydroxide, ammonium oxalate, ammonium sulphate, ammonium tartrate, ammonium carbonate, urea and mixtures thereof.

13. The process according to anyone of claims 1-12, wherein the nitrogenous oxidizing agent having a nitrogen atom with oxidation state of five is selected from the group consisting of urea nitrate, ammonium nitrate, nitric acid and mixtures thereof.

14. An apparatus for reducing nitrogen oxides content in exhaust gases of combustion system comprising a SCR catalyst and upstream thereof feed means of an ammonia-based reducing agent gaseous or liquid form and a nitrogenous oxidizing agent having a nitrogen atom with oxidation state of five in gaseous or liquid form, wherein said feed means consist of:
(i) a feed vessel of said reducing agent and a feed vessel of said oxidizing agent and injection devices of which at least one in common or
(ii) a feed vessel of said reducing agent and a feed vessel of said oxidizing agent, being each of said vessels equipped with at least one appropriate injection device.

## Patentansprüche

1. Verfahren zur Verringerung des Stickstoffoxidgehaltes in den Abgasen eines Verbrennungssystems, durchgeführt mittels einer Vorrichtung umfassend einen SCR-Katalysator und stromaufwärts davon Zuführmittel eines auf Ammoniak basierenden Reduktionsmittels und eines stickstoffhaltigen Oxidierungsmittels mit einem Stickstoffatom mit einem Oxidierungszustand von fünf, wobei das Verfahren den Schritt des Zuführens durch das Zuführmittel einer gasförmigen oder liquiden Form eines auf Ammoniak basierenden Reduktionsmittels und einer gasförmigen oder liquiden Form eines stickstoffhaltigen Oxidierungsmittels mit einem Stickstoffatom mit einem Oxidierungszustand von fünf umfasst.

2. Verfahren nach Anspruch 1, wobei der Zuführungsschritt durch ein Zuführungsmittel geschieht, das aus einem Einzelgefäß besteht, das sowohl das auf Ammoniak basierende Reduktionsmittel als auch das stickstoffhaltige Oxidierungsmittel mit einem Stickstoffatom mit einem Oxidierungszustand von fünf zuführt.

3. Verfahren nach Anspruch 1, wobei der Zuführungsschritt durch zwei Gefäße geschieht, die sowohl das auf Ammoniak basierende Reduktionsmittel als auch das stickstoffhaltige Oxidierungsmittel mit jeweils einem Stickstoffatom mit dem Oxidierungszustand von fünf durch Einspritzvorrichtungen, von denen wenigstens einer gemeinsam verwendet wird, zuführen.

4. Verfahren nach Anspruch 1, wobei der Zuführungsschritt durch zwei Gefäße geschieht, die mit ihren eigenen Einspritzvorrichtungen ausgerüstet sind, welche das auf Ammoniak basierende Reduktionsmittel und das stickstoffhaltige Oxidierungsmittel mit einem Stickstoffatom mit dem Oxidierungszustand von jeweils 5 zuführen.

5. Verfahren nach einem der Ansprüche 1 bis 4, wobei der Zuführungsschritt des Oxidierungsmittels und des Reduktionsmittels entweder fortlaufend oder intermittierend geschieht.

6. Verfahren nach Anspruch 5, wobei sowohl beim fortlaufenden als auch beim intermittierenden Zuführungsschritt das Durchschnittsverhältnis im Zeitverlauf des Oxidierungsmittels zum Reduktionsmittel derart ist, dass das Verhältnis von Nitrationenäquivalenten, die in dem stickstoffhaltigen Oxidierungsmittel vorliegen, das ein Stickstoffatom mit dem Oxidierungszustand von fünf aufweist, zu Ammoniumionenäquivalenten, die in dem Reduktionsmittel vorliegen, und, schließlich, in dem stickstoffhaltigen Oxidierungsmittel selbst, größer als 0 und kleiner oder gleich 0,5 ist.

7. Verfahren nach Anspruch 5, wobei in dem Falle des intermittierenden Zuführungsschrittes das Verhältnis des Oxidierungsmittels mit einem Stickstoffatom mit einem Oxidierungszustand von fünf zum Reduktionsmittel durch geeignete Modulierungsmittel der Dosierung der zwei Mittel nach den Einsatzbedingungen der SCR-Vorrichtung moduliert werden kann.

8. Vorrichtung nach einem der Ansprüche 1 bis 7, wobei das Verhältnis von Ammoniumionenäquivalenten, die sowohl in dem Verringerungsmittel und schließlich dem Oxidierungsmittel vorliegen und der Summe der NOx-Volumen, die in den Abgasen vorliegen, zu den Nitrationenäquivalenten, die in dem Oxidierungsmittel vorliegen, kleiner oder gleich etwa 1 ist.

9. Verfahren nach Anspruch 1, wobei der Schritt der Zuführung eines auf Ammoniak basierenden Reduktionsmittels und eines stickstoffhaltigen Oxidierungsmittels mit einem Stickstoffatom mit dem Oxidierungszustand von fünf in der folgenden Reihenfolge stattfindet:
a) Zuführen des Oxidierungsmittels in der Abwesenheit von NOx über den SCR-Katalysator und
b) Passieren des Abgases zusammen mit dem Reduktionsmittel.

10. Verfahren nach Anspruch 1, wobei der Schritt des Zuführens eines auf Ammoniak basierenden Reduktionsmittels und eines stickstoffhaltigen Oxidierungsmittels mit einem Stickstoffatom mit einem Oxidierungszustand von fünf über den SCR-Katalysator geschieht, bevor ein Abgasstrom alleine oder zusammen mit dem Reduktionsmittel strömen muss.

11. Verfahren nach einem der Ansprüche 1 bis 10, durchgeführt bei Temperaturen im Bereich von 50 bis 550°C.

12. Verfahren nach einem der Ansprüche 1 bis 11, wobei das auf Ammoniak basierende Reduktionsmittel aus der aus Ammoniak, Ammoniumacetat, Ammoniumbicarbonat, Ammoniumcarbamat, Ammoniumchlorid, Ammoniumformat, Ammoniumhydroxid, Ammoniumoxalat, Ammoniumsulphat, Ammoniumtartrat, Ammoniumcarbonat, Harnstoff und Mischungen davon bestehenden Gruppe ausgewählt ist.

13. Verfahren nach einem der Ansprüche 1 bis 12, wobei das stickstoffhaltige Oxidierungsmittel, das ein Stickstoffatom mit einem Oxidierungszustand von fünf aufweist, aus der aus Harnstoffnitrat, Ammoniumnitrat, Salpetersäure und Mischungen davon bestehenden Gruppe ausgewählt ist.

14. Vorrichtung zur Verringerung des Stickoxidgehaltes in Abgasen von Verbrennungssystemen umfassend einen SCR-Katalysator und stromaufwärts davon Mittel eines auf Ammoniak basierenden Reduktionsmittels in gasförmiger oder liquider Form und ein stickstoffhaltiges Oxidierungsmittel mit einem Stickstoffatom mit einem Oxidierungszustand von fünf in gasförmiger oder liquider Form, wobei die Zuführmittel aus folgendem bestehen:
(i) ein Zuführgefäß des Reduktionsmittels und ein Zuführgefäß des Oxidierungsmittels und Einspritzvorrichtungen, von denen wenigstens eine gemeinsam verwendet wird, oder
(ii) ein Zuführgefäß des Reduktionsmittels und ein Zuführgefäß des Oxidierungsmittels, wobei jedes der Gefäße mit wenigstens einer geeigneten Einspritzvorrichtung ausgestattet ist.

## Revendications

1. Procédé de réduction de la teneur en oxydes d'azote dans les gaz d'échappement d'un système de combustion, réalisé au moyen d'un appareil comprenant un catalyseur RCS et en amont un moyen d'alimentation d'un agent de réduction à base d'ammoniac et d'un agent d'oxydation azoté ayant un atome d'azote avec un état d'oxydation de cinq, ledit procédé comprenant l'étape d'alimentation par le biais dudit moyen d'alimentation d'une forme gazeuse ou liquide d'un agent de réduction à base d'ammoniac et d'une forme gazeuse ou liquide d'un agent d'oxydation azoté ayant un atome d'azote avec un état d'oxydation de cinq.

2. Procédé selon la revendication 1, dans lequel l'étape d'alimentation se produit par le biais d'un moyen d'alimentation se composant d'un réservoir unique qui alimente à la fois l'agent de réduction à base d'ammoniac et l'agent d'oxydation azoté ayant un atome d'azote avec un état d'oxydation de cinq.

3. Procédé selon la revendication 1, dans lequel l'étape d'alimentation se produit par le biais de deux réservoirs qui alimentent respectivement l'agent de réduction à base d'ammoniac et l'agent d'oxydation azoté ayant un atome d'azote avec un état d'oxydation de cinq, par le biais de dispositifs d'injection dont au moins un est commun.

4. Procédé selon la revendication 1, dans lequel l'étape d'alimentation se produit par le biais de deux réservoirs équipés de leurs propres dispositifs d'injection, qui alimentent respectivement l'agent de réduction à base d'ammoniac et l'agent d'oxydation azoté ayant un atome d'azote avec un état d'oxydation de cinq.

5. Procédé selon l'une quelconque des revendications 1 à 4, dans lequel l'étape d'alimentation dudit agent d'oxydation et dudit agent de réduction se produit de manière continue ou de manière discontinue.

6. Procédé selon la revendication 5, dans lequel dans les deux étapes d'alimentation continue et discontinue, le rapport moyen par rapport au temps dudit agent d'oxydation audit agent de réduction est tel que le rapport d'équivalents d'ion nitrate présents dans l'agent d'oxydation azoté ayant un atome d'azote avec un état d'oxydation de cinq aux équivalents d'ion ammonium présents dans l'agent de réduction et, éventuellement, dans l'agent d'oxydation azoté lui-même est supérieur à 0 et inférieur ou égal à 0,5.

7. Procédé selon la revendication 5, dans lequel dans le cas de l'étape d'alimentation discontinue, le rapport dudit agent d'oxydation ayant un atome d'azote avec un état d'oxydation de cinq audit agent de réduction peut être modulé par un moyen de modulation approprié de la dose des deux agents selon les conditions de fonctionnement de l'appareil RCS.

8. Procédé selon l'une quelconque des revendications 1 à 7, dans lequel le rapport d'équivalents d'ion ammonium présents dans l'agent d'oxydation et éventuellement dans l'agent de réduction et la somme des volumes de NOx présents dans les gaz d'échappement aux équivalents d'ion nitrate présents dans l'agent d'oxydation va être inférieur ou égal à environ 1.

9. Procédé selon la revendication 1, dans lequel ladite étape d'alimentation d'un agent de réduction à base d'ammoniac et d'un agent d'oxydation azoté ayant un atome d'azote avec un état d'oxydation de cinq se produit dans l'ordre suivant : a) alimentation de l'agent d'oxydation en l'absence de NOx sur le catalyseur RCS, et b) passage des gaz d'échappement avec l'agent de réduction.

10. Procédé selon la revendication 1, dans lequel ladite étape d'alimentation d'un agent de réduction à base d'ammoniac et d'un agent d'oxydation azoté ayant un atome d'azote avec un état d'oxydation de cinq sur le catalyseur RCS se produit avant d'avoir un écoulement de gaz d'échappement seul ou avec l'agent de réduction.

11. Procédé selon l'une quelconque des revendications 1 à 10, réalisé à des températures comprises dans la plage allant de 50 à 550 °C.

12. Procédé selon l'une quelconque des revendications 1 à 11, dans lequel l'agent de réduction à base d'ammoniac est sélectionné dans le groupe constitué par l'ammoniac, l'acétate d'ammonium, le bicarbonate d'ammonium, le carbamate d'ammonium, le chlorure d'ammonium, le formiate d'ammonium, l'hydroxyde d'ammonium, l'oxalate d'ammonium, le sulfate d'ammonium, le tartrate d'ammonium, le carbonate d'ammonium, l'urée et des mélanges de ceux-ci.

13. Procédé selon l'une quelconque des revendications 1 à 12, dans lequel l'agent d'oxydation azoté ayant un atome d'azote avec un état d'oxydation de cinq est sélectionné dans le groupe constitué par le nitrate d'urée, le nitrate d'ammonium, l'acide nitrique et des mélanges de ceux-ci.

14. Appareil de réduction de la teneur en oxydes d'azote dans les gaz d'échappement d'un système de combustion comprenant un catalyseur RCS et en amont un moyen d'alimentation d'une forme gazeuse ou liquide d'un agent de réduction à base d'ammoniac et d'une forme gazeuse ou liquide d'un agent d'oxydation azoté ayant un atome d'azote avec un état d'oxydation de cinq, dans lequel ledit moyen d'alimentation se compose de :
(i) un réservoir d'alimentation dudit agent de réduction et d'un réservoir d'alimentation dudit agent d'oxydation et des dispositifs d'injections dont au moins un est commun, ou
(ii) un réservoir d'alimentation dudit agent de réduction et d'un réservoir d'alimentation dudit agent d'oxydation, chacun desdits réservoirs étant équipé d'au moins un dispositif d'injection approprié.
